Europäisches Patentamt

European Patent Office

Office européen des brevets

(11) Veröffentlichungsnummer: **0 219 614**
A1

## (12) EUROPÄISCHE PATENTANMELDUNG

(21) Anmeldenummer: 86109638.6

(22) Anmeldetag: 14.07.86

(51) Int. Cl.⁴: **F 16 L 55/02**
F 16 L 9/14, B 32 B 1/00

(30) Priorität: 04.10.85 DE 3535513

(43) Veröffentlichungstag der Anmeldung:
29.04.87 Patentblatt 87/18

(84) Benannte Vertragsstaaten:
AT CH DE FR GB IT LI SE

(71) Anmelder: GESENKSCHMIEDE SCHNEIDER GMBH
Ulmer Strasse 112
D-7080 Aalen(DE)

(72) Erfinder: Ebbinghaus, Alfred
Schellingstrasse 78
D-7080 Aalen(DE)

(74) Vertreter: Neidl-Stippler, Cornelia, Dr.
Anwaltskanzlei Münich, Neidl-Stippler, Schiller
Willibaldstrasse 36/38
D-8000 München 21(DE)

(54) Verwendung von Hohlkörpern mit Schichtaufbau.

(57) Die Erfindung betrifft die Verwendung von Hohlkörpern mit Schichtaufbau aus verschiedenen Werkstoffen als schwingungsgedämpfte, körperschallisolierende und/oder geräuschabkoppelnde Teile.

EP 0 219 614 A1

Beschreibung

Die Erfindung betrifft eine neue Verwendung eines Hohlkörpers als schwingungsgedämpfte, körperschallisolierende und/ oder geräuschabkoppelnde Teile.

In der Deutschen Patentanmeldung P 34 12 633.3 ist ein mehrschichtiger Hohlkörper sowie ein Verfahren zu seiner Herstellung beschrieben, der durch gemeinsames Umformen von Schichten unterschiedlichen Materials hergestellt wird.

Diese Hohlkörper können eine metallische Außen- und Innenschicht aufweisen, die durch eine Zwischenschicht miteinander verbunden sind, wobei diese Zwischenschicht bevorzugt aus einem nicht metallischen Material, beispielsweise einem Fasermaterial, wie einer Glasfasermatte, einem Kunstfasermaterial, wie einer Teflonmatte, bestehen kann.

Hohlkörper werden üblicherweise unter anderem als Wellen, inbesondere Getriebewellen eingesetzt.

Die bisherigen Wellen sind jedoch in sofern nachteilig, als sie zu Eigenschwingungen neigen und es daher notwendig ist, unterschiedlichste Maßnahmen zur Schwingungsdämpfung derartiger Wellen zu ergreifen.

Es ist daher Aufgabe der Erfindung, wellenförmige Bauteile anzugeben, welche im geringerem Maße zur Schwingungsübertragung neigen als die bisher verwandten, aus einem Material gefertigten Bauteile

Die Aufgabe wird erfindunsgemäß dadurch gelöst, daß ein Hohlkörper mit Schichtaufbau als schwingungsgedämpftes körperschallisolierendes und/ oder geräuschabkoppelndes Bauteil eingesetzt wird.

Dabei ist es besonders bevorzugt, wenn der Hohlkörper eine metallische Innen- und Außenschicht aufweist. Bei einer bevorzugten Ausfürungsform der Erfindung beinhaltet er eine im wesentlichen an organische und/oder organische Fasern aufweisende Zwischenschicht.

Der erfindungsgemäße Hohlkörper ist durch gemeinsames Umformen der Schichtmaterialien herstellbar, es können also übliche Umformverfahren wie sie bisher für derartige Bauteile eingesetzt wurden, verwendet werden.

Bei der besonders bevorzugten Herstellung des erfindungemäßen Hohlkörpers wird dieser gefertigt, indem er innen durch ein elastisches Medium, bevorzugt eine Flüssigkeit unter hohem Druck, während des Umformens abgestützt wird, um eine Trennung der unterschiedlichen Schichten während des Verformens zu vermeiden.

Dadurch, daß das mehrschichtige Bauteil aus unterschiedlich Schwingungen leitenden Materialien aufgebaut ist, vermag es nicht mehr, wie bisher eingesetzte Bauteile, Schwingungen zu leiten und führt daher zu einem erheblich ruhigeren Lauf, wenn es beispielsweise als Welle und insbesondere als Getriebewelle verwendet wird.

GESENKSCHMIEDE SCHNEIDER GMBH
Ulmer Straße 112
7080 Aalen

---

Verwendung von Hohlkörpern mit Schichtaufbau

---

P a t e n t a n s p r ü c h e

1. Verwendung von Hohlkörpern mit Schichtaufbau aus verschiedenen Werkstoffen als schwingungsgedämpfte, körperschallisolierende und/oder geräuschabkoppelnde Teile.

2. Verwendung gemäß Anspruch 1, dadurch gekennzeichnet, daß die Hohlkörper mit Schichtaufbau mindestens dreischichtig sind.

Bankverbindungen: Postgiroamt München 150505-802  (BLZ 70010080)
(Accounts)    Deutsche Bank AG, Konto 2709988  (BLZ 70070010)

3. Verwendung gemäß einem der Ansprüche 1 oder 2,
dadurch gekennzeichnet, daß der Hohlkörper (eine) metallische Innen- und/oder Außenschicht (en) aufweist.

4. Verwendung gemäß Anspruch 3,
dadurch gekennzeichnet, daß der Hohlkörpermindestens eine nichtmetallische verformbare Zwischenschicht aufweist.

5. Verwendung gemäß Anspruch 4,
dadurch gekennzeichnet, daß die nichtmetallische verformbare Zwischenschicht Keramikmaterial, Kunststoff und/oder Glas aufweist.

6. Verwendung gemäß Anspruch 4 oder 5,
dadurch gekennzeichnet, daß die Zwischenschicht eine Keramikfasermatte oder Keramikpapier aufweist.

7. Verwendung gemäß eimem oder mehreren der vorangehenden Ansprüche,
dadurch gekennzeichnet, daß das Hohlteil eine metallische Außenschicht, eine metallische Innenschicht und eine Keramikfaser-Zwischenschicht, die gemeinsam zur Herstellung des Hohlkörpers umgeformt worden sind, aufweist.

8. Verwendung gemäß einem der vorangehenden Ansprüche,
dadurch gekennzeichnet, daß der Hohlkörper durch gemeinsames Umformen der Schichtmaterialien herstellbar ist.

**EUROPÄISCHER RECHERCHENBERICHT**

Europäisches
Patentamt

| EINSCHLÄGIGE DOKUMENTE | | EP 86109638.6 |
|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP - A1 - 0 047 525 (NIPPON STEEL CORPORATION)  * Gesamt * | 1,2,3, 4,5,7 | F 16 L 55/02 F 16 L 9/14 B 32 B 1/00 |
| X | DE - A1 - 2 521 119 (GRÜNZWEIG & HARTMANN UND GLASFASER AG)  * Gesamt * | 1,2,3, 4,7 | |
| X | DE - A1 - 3 242 271 (RUNDEL ADOLF)  * Gesamt * | 1,2,3 | |
| A | EP - A2 - 0 073 024 (MTU MOTOREN UND TURBINEN UNION) | | |

| RECHERCHIERTE SACHGEBIETE (Int. Cl.4) |
|---|
| F 16 L 9/00 F 16 L 55/00 B 32 B 1/00 B 32 B 15/00 B 32 B 18/00 |

Der vorliegende Recherchenbericht wurde für alle Patentansprüche erstellt.

| Recherchenort | Abschlußdatum der Recherche | Prüfer |
|---|---|---|
| WIEN | 30-12-1986 | SCHUGANICH |